Europäisches Patentamt

European Patent Office

Office européen des brevets

(11) Publication number: **0 102 571**
**A2**

# (12) EUROPEAN PATENT APPLICATION

(21) Application number: **83108185.6**

(22) Date of filing: **18.08.83**

(51) Int. Cl.³: **B 24 D 3/28**

(30) Priority: **23.08.82 US 410238**

(43) Date of publication of application:
**14.03.84 Bulletin 84/11**

(84) Designated Contracting States:
**DE FR GB IT SE**

(71) Applicant: **NORTON COMPANY**
**1 New Bond Street**
**Worcester Massachusetts 01606(US)**

(72) Inventor: **Zimmer, William Frederick**
**28 Walbridge Road**
**Paxton Massachusetts(US)**

(74) Representative: **Baillie, Iain Cameron et al,**
**c/o Ladas & Parry Isartorplatz 5**
**D-8000 München 2(DE)**

(54) **Cold-pressed grinding wheel.**

(57) An organic polymer-bonded grinding wheel made by wetting abrasive grain with a liquid plasticizer or pick-up agent, adding a powdered organic bond to said pick-up agent wetted abrasive grain, molding the abrasive pick-up agent powdered bond mix, and firing the molded article to cure the organic polymer in the bond and wherein the pick-up agent is composed of a mixture of furfuraldehyde and a rubber, particularly butadiene-acrylonitrile rubber.

EP 0 102 571 A2

0102571

The invention relates to grinding wheels and more particularly to grinding wheels bonded with organic polymer based bonds.

The following publications are representative of the most relevant prior art known to the Applicant at the time of filing of the application.

UNITED STATES PATENTS

| | | |
|---|---|---|
| 1,924,748 | August 29, 1933 | E. E. Novotny et al |
| 2,814,554 | November 26, 1957 | R. A. Rowse |
| 2,825,638 | March 4, 1958 | A. C. Booth |
| 3,041,156 | June 26, 1962 | R. A. Rowse et al |
| 3,323,885 | June 6, 1967 | R. A. Rowse et al |

So-called organic grinding wheels, i.e. those wherein the abrasive grains are bonded with an organic polymer of one kind or another, are well known in the art. While there are a vast number of variations and permutations of organic wheels they are all basically composed of abrasive grain, a plasticizer or pick-up agent, a polymeric bond which usually includes fillers of one kind or another, and frequently a significant amount of porosity. Such wheels are generally manufactured by first placing a predetermined amount of abrasive grain in a mixer; adding a liquid plasticizer or pick-up agent, usually furfuraldehyde or a liquid resin which is compatible with the powdered resin or prepolymer of the powdered bond and mixing the two until essentially all of the abrasive grain is wetted with the liquid; mixing with the wetted abrasive grain an appropriate amount of powdered bond which is made up of powdered organic resin and which may include one or more fillers and calcium oxide, the presence of the latter being determined by the type of plasticizer used; the powdered bond may include a dust depressant such as a neutral anthracene oil. The grinding wheel mix thus prepared is then formed in the shape of a wheel and heat treated to cure or cross-link the organic polymer or prepolymer that is the main constituent of the bond. This forming can be carried out by placing the mix in a mold, applying pressure to the mix at room temperature, removing the green (uncured) wheel from the mold, and subjecting it to a heat treatment at, for example, 180°C. for a specific time period. Alternatively, the wheels can be made by the hot-pressing method when highly dense wheels are desired which method involves placing the mix in an appropriate mold and applying heat and pressure simultaneously to the mix, thus bringing about maximum compaction and at least partial curing of the resin in the bond; if the wheels have not been cured to the desired degree in the press, then the wheels are subjected to a subsequent heat treatment similar to that of the room temperature pressing method already described.

Several prior art variants on the above basic products and processes are particularly relevant to the present invention.

Organic polymer bonded grinding wheels are made in a broad spectrum of degrees of hardness ranging from very soft to extremely hard, this property being determined, to a great extent, by the amount of porosity built into the product. Characteristic of those wheels that contain a substantial amount of porosity, e.g. 18% or more, is their susceptibility to deterioration by exposure to water as would occur if said wheels were used in wet grinding operations. One approach to eliminating this problem is taught by the Rowse et al '885 patent. When liquid resin plasticized wheels are wrapped in an impervious barrier during the cure cycle rather than being cured laid open to the oven atmosphere, the resulting wheels are much more resistant to deterioration by water. Rowse et al '885 shows the magnitude of improvement in the wheel strength results in Figure 3 and in the grinding results shown at the top of column 8. Still another approach to solving the same problem is disclosed by the Rowse et al '156 patent in which abrasive grain is rendered "water proof" by treating the grain with a silane. The present invention addresses this problem as well but solves it i.e. accomplishes the same results or better, without adding a step to the normal wheel manufacturing process. By using the plasticizer of the present invention in place of the prior art plasticizers of both Rowse et al patents, there is no need for the additional step of silane treatment of the abrasive grain or the additional step of wrapping the green (uncured) wheels in an impervious wrapper.

In addition to the wide use of liquid resins, especially phenol-formaldehyde, and furfuraldehyde, the Novotny et al patent teaches the use of furfuryl alcohol as a wetting agent. The term wetting agent as used by Novotny el at means the liquid added to the blend of abrasive grain and powder organic polymer bond. Novotny et al is relevant to the invention because one embodiment of the invention uses furfuryl alcohol as one member of a two-part system used as a plasticizer, i.e. the liquid material applied directly to the abrasive grain.

The Rowse patent 2,814,554 is directed at an improved grinding wheel wherein the improvement results from the incorporation of rubber in the bond. The rubber is introduced into the wheel system at the mix preparation stage. Abrasive grain is placed in a mixer and coated with liquid rubber and a vulcanizing quantity of sulfur. To this liquid rubber and sulfur coated abrasive is added a phenol-formaldehyde based powdered bond which includes typical amounts of fillers. The wheels are molded and processed in the usual manner to finished product. These wheels are compared to standard wheels in which furfuraldehyde was used as the plasticizer. The Rowse reference is pertinent for its teaching of the use of liquid

-4-

rubber as the plasticizer because the present invention also uses rubber directly on the abrasive grain but in the latter case the rubber is used in conjunction with a liquid vehicle therefore, and no sulfur is needed.

U.S. Patent 2,825,638 to Booth teaches the manufacture of grinding wheels with properties similar to the product of the instant invention. In fabricating his product Booth first coats the abrasive grain, in a mixer, with a vulcanizing quantity of sulfur (or some other vulcanizing agent). The sulfur coated grain is then coated with a liquid plasticizer which is a mixture of 10-70% of liquid butadiene-acrylonitrile copolymer and 30-90% furfuraldehyde. When the abrasive is essentially completely coated with the mixture of butadiene-acrylonitrile and furfural a conventional phenol-formaldehyde based powdered bond, including the usual fillers and lime, is added to the wetted abrasive and mixed until the materials are uniformly blended. The granular mix is then placed in a mold set-up that has been preheated to at least about 171°C., and the mix levelled; the heating is continued while a small amount of pressure is applied, i.e. a pressure of from 1 to 500 psi $(6.9 \times 10^3$ to $3.4 \times 10^6$ N/m$^2$ in SI units). The partially cured and partially formed wheel is then subjected to continued heating at about 171°C. but at a pressure of between 1000 and 5000 psi $(6.9 \times 10^6$ to $3.43 \times 10^7$ N/m$^2)$.

The present invention differs from Booth in that the invention product is a cold-pressed grinding wheel while Booth's product is hot pressed, and Booth's product calls for the use of a vulcanizing agent but the present product does not.

DISCLOSURE OF THE INVENTION

In the manufacture of organic polymer bonded grinding wheels, two liquids are generally used for two distinctly different purposes and the terminology applied to these two different liquids has created some confusion. In the present application the liquid applied directly to the abrasive grain which causes the powdered bond, which is added subsequently, to adhere to the liquid wetted abrasive grain, is referred to as the plasticizer or pick-up agent. The liquid which is added to the abrasive-bond mix as the last step in the preparation of that mix is referred to herein as a dust depressant because that is what the material does, i.e. it reduces or eliminates the dustiness that is inherent in some wheel mixes.

By substituting the pick-up agent of the present invention, i.e. a combination and preferably a solution of a thermoplastic polymer in a liquid vehicle or solvent, substantial improvements are realized in both the cold pressed product and the cold pressing process. With respect to the process, the plasticizer or pick-up agent functions extremely efficiently in picking up the powdered bond without excessive balling thereby eliminating the need for multiple screenings of the mix; the mixes do not cake-up or set-up as that phenomenon is known in the art; and, the mixes press easily at room temperature (cold pressing) to produce green wheels with good handling strength. The final product has a resistance to deterioration by water that is at least equivalent to the water resistance of products which have been made according to the Rowse et al '885 or the Rowse et al '156 patents, or a combination of both. In addition, the invention cold pressed product has a lower modulus of elasticity than standard furfuraldehyde or liquid resin plasticized phenol-formaldehyde resin bonded cold pressed wheels which manifests itself in wheels which grind with less vibration.

The plasticizer which, in combination with cold pressing, produces the product of the present invention, is made up of from 10 to 90% by volume of a thermoplastic polymer and 5 to 90% by volume of a liquid vehicle or a solvent for said thermoplastic polymer. The thermoplastic polymer is preferably butadiene-acrylonitrile; a carboxyl, amine, thiol, or vinyl terminated butadiene-acrylonitrile; or; acrylonitrile-butadiene-styrene. While other vehicles or solvents are operable, the preferred types of liquids are aldehydes, unsaturated cyclic hydrocarbons, ketones and aromatics with boiling points above about 140°C.; especially suitable are terpene, sesqueterpene, furfuryl alcohol, and furfuraldehyde.

While the present invention embodies the complete spectrum of cold-pressed organic polymer-bonded grinding wheel specifications, i.e. abrasive, grade, and structure number, it is primarily concerned with those wheel specifications which are defined by 20 to 64% by volume of abrasive grain, 4 to 76% by volume of organic polymer based binder, and from 0 to 50% by volume pores. The binder per se is composed of 50 to 100% by volume of organic polymer which can be phenol-formaldehyde condensation resin unmodified or modified with any of the thermo-plastics currently used for that purpose including butadiene-acrylonitrile rubber; or the binder can be a polyester, epoxy, polyimide and the like. Where phenol-formaldehyde resins are used, it is preferred that the hexamethylenetetramine cross linking agent used is compounded in the base resin in an amount of from about 1 to 15% by weight. The plasticizer or pick-up agent should be present in an amount of from 1 to 40% by volume, which in turn is preferably 5 to 95% by volume of liquid vehicle or solvent and 5 to 95% by volume of thermoplastic polymer.

The bond may include from 0 to 50% by volume of active and/or inactive fillers such as e.g. potassium fluoborate, sodium chloride, sodium fluoaluminate, iron disulfide, potassium sulfate, polyvinylidene chloride, zinc sulfide, alkali haloferrates and the like and mixtures of two or more of these known filler materials. Similarly, pore inducing media may be included in the wheels, as is well known in the art, to make high structure soft acting wheels; the range of pore inducing media is from 0 to 50% by volume. Many pore inducing media are known in the art but foamed glass particles or hollow glass spheres are preferred. Another ingredient that may be incorporated in the bond is calcium oxide in an amount of up to 10% by volume; in some

cases the lime is not needed while in others some lime must be used to produce a product of optimum quality as for example when furfuraldehyde is the solvent for the thermoplastic polymer and the wheel bond proper is a powdered hexamethylenetetramine cured phenol-formaldehyde resin.

When the liquid vehicle for the thermoplastic polymer which makes up the plasticizer, is potentially reactive with another of the materials in the bond system then not all of that liquid still remains after the molded wheel is heat treated to cure the bond. In the case of furfuraldehyde as the liquid vehicle component of the plasticizer used in conjunction with a hexamethylenetetramine cured phenol-formaldehyde resin as the principal bond constituent, it is known that some of the furfuraldehyde reacts with ammonia generated during the cure and that theoretically the aldehyde is capable of reacting with the phenolic resin. Therefore the final product probably does not contain all of the initial aldehyde as free aldehyde but rather includes some furfuramide and some furfuraldehyde tied up in the phenolic resin structure, as well as unreacted furfuraldehyde. Therefore, whenever the plasticizer is referred to in the final abrasive product, it is understood that the reference thereto includes both the case where the liquid is still present in its original form, and the case where more or less of liquid has reacted to form a new compound or material.

EXAMPLES OF THE PREFERRED EMBODIMENTS

In its preferred form the product of the invention uses, as the plasticizer or pick-up agent, furfuraldehyde and a liquid butadiene-acrylonitrile rubber, specifically Hycar 1312 manufactured by B. F. Goodrich Chemical Company. The following examples are based on that preferred pick-up agent system.

EXAMPLE I

A series of 8 wheels having a volume percent formulation of 50% abrasive having an average particle size of about 710 microns, 16.1% bond including both powdered

-8-

bond and plasticizer, and 33.9% porosity were made by first silane treating a quantity of 710 micron silicon carbide abrasive grain according to the teachings of U.S. Letters Patent No. 3,041,156. Then 88.65 pounds (40.21 kg) of the silane treated grain was placed in a mixer to which was added 1.36 pounds (0.62 kg) of a liquid one-stage phenol-formaldehyde resin and the two materials mixed until the abrasive grain was essentially all coated with the liquid. 9.99 Pounds (4.53 kg) of a powdered two-stage phenol-formaldehyde resin which contained 7.5% by weight of hexamethylenetetramine and about 9% by weight of a butadiene-acrylonitrile rubber were mixed with the liquid resin wetted grain. The liquid resin functioned effectively as a pick-up agent or plasticizer and picked up essentially all of the powdered resin; about 100 cc of a light chlorinated hydrocarbon oil were added to the mix as a dust depressant.

The foregoing mix was screened through a screen having openings that were about 1190 microns (16 mesh U.S. Standard Sieve Series) and used to mold 8.188" x 1.125" x 1" (20.797 cm x 2.858 cm x 2.54 cm) wheels at room temperature in the conventional manner. The wheels were then fired in an oven in a bake cycle which involved a gradual temperature rise to 175°C. and a 15 hour hold at that temperature; prior to heat treatment the wheels were wrapped in kraft paper backed aluminum foil thus forming an impervious wrapping as taught in U.S. Letters Patent No. 3,323,885. The wheels were cooled, removed from the oven and faced, sided and reamed in preparation for speed testing.

Another series of 8 wheels were made in the same manner as those above and were, in fact, the same except that the resin in the bond in this case was a straight unmodified phenol-formaldehyde resin containing 7.5% by weight of hexamethylenetetramine and no butadiene-acrylonitrile rubber modifier; in addition, these wheels were plasticized with 18% by volume of a 50-50 mixture of furfuraldehyde and liquid butadiene-acrylonitrile rubber.

In addition to the wheels, slugs, measuring 8" (20.32 cm) in diameter and 4" (10.16 cm) thick were processed in the same manner using the same mixes. After the curing cycle was completed the slugs made utilizing the liquid resin plasticizer were found to have slumped 2.14% while the furfuraldehyde-butadiene-acrylonitrile plasticized slugs slumped only 1.90%.

Both series of wheels were speed tested to destruction, several of each series being tested dry at room temperature and others wet at room temperature after soaking in room temperature water for 10 days. The wheels plasticized with liquid phenol-formaldehyde resin showed a decrease in stength, after soaking, of about 2% as compared to the dry stength, despite the fact that the wheels contained silane treated grain and were cured enclosed in an impervious wrapping. The wheels plasticized with the furfuraldehyde-butadiene-acrylonitrile plasticizer showed a measured increase in strength of about 1% after having soaked in water for 10 days.

EXAMPLE II

To show that the use of furfural-butadiene-acrylonitrile plasticizer with non-silane treated abrasive grain produces the same wet strength improvement as the expensive silane treated abrasive, a three grade series of wheels were made in the same manner as those in Example I except for the differences noted hereinafter; the wheel grades were designated as K, M, O, with the wheels becoming progressively harder going from K to O grade as is customary in the art. The K and O grades were qualitatively identical, both utilizing silane treated grain and a powdered phenolic resin which contained about 16% by weight of butadiene-acrylonitrile rubber. The M grade wheels, on the other hand, were made with unmodified phenol-formaldehyde resin and untreated abrasive, but used a 50% by weight solution of butadiene-acrylonitrile liquid rubber dissolved in furfuraldehyde. None of the wheels were wrapped during the cure cycle. The wheels which were 8.188" x 1.125" x 1" (20.797 cm x 2.858 cm x 2.54 cm) and the abrasive, in all cases, was a 50% mixture of aluminum oxide and silicon carbide having an average particle size of about 710 microns, had the following weight percent and volume percent composition:

K Grade

|  | Weight % |  | Volume % |
|---|---|---|---|
| abrasive | 89.10 | abrasive | 52 |
| plasticizer | 1.75 | bond | 16 |
| powdered resin | 9.15 | pores | 32 |

M Grade

|  | Weight % |  | Volume % |
|---|---|---|---|
| abrasive | 88.05 | abrasive | 52 |
| plasticizer | 2.15 | bond | 20 |
| powdered resin | 9.80 | pores | 28 |

O Grade

|  | Weight % |  | Volume % |
|---|---|---|---|
| abrasive | 86.10 | abrasive | 52 |
| plasticizer | 2.20 | bond | 24 |
| powdered resin | 11.70 | pores | 24 |

The resulting wheels were speed tested to destruction both dry and wet after soaking in water, as described in Example I, with the following relative strength retention of the strength of soaked wheels to the strength of the wheels dry, i.e. unsoaked:

| Wheel Grade | Wet Strength/Dry Strength x 100 |
|---|---|
| K | 93.5 |
| M | 95.0 |
| O | 96.6 |

As is apparent from the wet strength retention data, the use of the butadiene-acrylonitrile plasticizer produced wheels with wet strength retention properties at least equivalent to the use of the more expensive silane treated grain used in the K and O grade wheels.

EXAMPLE III

A further advantage to the cold pressed product of the invention is an improved mix which results from the use of the furfuraldehyde-butadiene-acrylonitrile plasticizer in place of furfuraldehyde alone or liquid phenolic resin; the improvement manifests itself in mixes with little or no balled, unusable mix. The following two mixes were prepared and the amounts of balled mix measured in each case; the mixes were both for the same cold pressed grade of wheel, one contained the conventional furfuraldehyde while the other utilized a 60/40 furfuraldehyde/butadiene-acrylonitrile solution as the plasticizer.

Mix A

| | | |
|---|---|---|
| Abrasive | 10.14 lb. | (4603/56g) |
| furfuraldehyde | 0.74 " | ( 335.24g) |
| hollow glass beads* | 0.54 " | ( 243.16g) |
| powdered phenolic resin | 3.26 " | (1480.04g) |
| lime | 0.32 " | ( 152.28g) |

Mix B

| | | |
|---|---|---|
| Abrasive | 10.20 lb. | (4630.80g) |
| furfuraldehyde-butadiene-acrylonitrile | 0.67 lb. | ( 304.18g) |
| hollow glass beads* | 0.54 " | ( 245.16g) |
| powdered phenolic resin | 3.28 " | (1489.12g) |
| lime | 0.32 " | ( 145.28g) |

* - glass nodules ranging in size of from about 300 to 590 microns.

Mix A resulted in 15.9% by weight of the undesirable mix and/or bond balls while Mix B contained only 1.3% by weight of the mix and/or bond balls. The latter is an acceptable amount but the former is not.

-1-

C L A I M S

1.      A cold-pressed grinding wheel comprising abrasive grain, an organic polymer-based binder, and a pick-up agent for said organic polymer binder, wherein the pick-up agent consists essentially of from 10 to 95% by volume of a thermoplastic polymer and 90 to 5% by volume of a liquid vehicle for said thermoplastic polymer.

2.      A grinding wheel according to claim 1, wherein said thermoplastic polymer is butadiene-acrylonitrile, carboxy-terminated butadiene-acrylonitrile, amine-terminated butadiene-acrylonitrile, thiol-terminated butadiene-acrylonitrile, vinyl-terminated butadiene-acrylonitrile, or acrylonitrile-butadiene-styrene polymer, or a mixture thereof.

3.      A grinding wheel according to claim 1 or 2, wherein said vehicle is an aldehyde which is a solvent for said thermoplastic polymer and has a boiling point above about 140°C.

4.      A grinding wheel according to claim 1 or 2, wherein said vehicle is an unsaturated cyclic hydrocarbon which is a solvent for said thermoplastic polymer and has a boiling point above about 140°C.

5.      A grinding wheel according to claim 1 or 2, wherein said vehicle is a ketone which is a solvent for said thermoplastic polymer and has a boiling point above about 140°C.

6.      A grinding wheel according to claim 1 or 2, wherein said vehicle terpene, sesqueterpene, furfuryl alcohol, furfuraldehyde, or a mixture thereof.

7.      A grinding wheel according to any one of the preceding claims, wherein said grinding wheel comprises from 20 to 64% by volume of the abrasive grain, 4 to 76% by volume of the organic polymer-based binder, which is made up of 50 to 100% by volume of organic polymer, 0 to 10% of calcium oxide, and 0 to 50% by volume of filler, 1 to 40% by volume of a pick-up agent which is made up of 5 to 95% by volume of the liquid vehicle and 5 to 95% by volume of the thermoplastic polymer, 0 to 50% by volume of pores, and 0 to 50% by volume of a pore support medium.

8.      A grinding wheel according to claim 7, wherein the organic polymer is a powdered phenol formaldehyde resin.

9.      A grinding wheel according to claim 8, wherein the phenol formaldehyde resin includes butadiene-acrylonitrile rubber blended therein.